# FASCICULE DE BREVET EUROPEEN

(11) **EP 2 439 815 B1**
(45) Date de publication et mention de la délivrance du brevet: **23.09.2020**
(21) Numéro de dépôt: 11183997.3
(22) Date de dépôt: 05.10.2011
(51) Int. Cl.: H01R 4/30, H02G 3/00, H02G 3/04, H01R 4/36

(54) **Ensemble constitué d'un chemin de câbles en fil et d'un dispositif de connexion électrique**
Anordnung bestehend aus einem Kabelkanal und einer elektrische Verbindungsvorrichtung
Assembly consisting of a cable raceway and electrical connection device

(30) Priorité: 06.10.2010 FR 1003952
(43) Date de publication de la demande: 11.04.2012
(73) Titulaire: Legrand France, 87000 Limoges (FR); Legrand SNC, 87000 Limoges (FR)
(72) Inventeur: Decore, Raphaël, 72140 SILLE-LE-GUILLAUME (FR); Grevenche, Cécile, 53600 CHATRES-LA-FORET (FR)
(74) Mandataire: Santarelli

(56) Documents cités:
- EP-A1- 2 184 808
- WO-A1-88/07772
- WO-A2-2010/014951
- US-A- 5 429 532
- US-A- 5 718 610
- US-A1- 2005 233 648

## Description

La présente invention concerne un dispositif de connexion électrique, destiné notamment à un chemin de câbles.

Il est connu d'utiliser sur un chemin de câbles en fils, mais également sur un chemin de câbles en tôle, un accessoire permettant de réaliser une liaison équipotentielle par fixation sur ledit chemin de câbles d'une tresse reliée à la terre. La plupart des fabricants de chemins de câbles proposent dans leurs catalogues des accessoires qui présentent d'une part des moyens pour se fixer sur leurs chemins de câbles et d'autre part des moyens pour recevoir une tresse métallique.

Il existe notamment dans le catalogue de la marque Cablofil un produit commercialisé sous le nom "Grifequip" qui se présente sous la forme de deux plaques disposées en vis-à-vis l'une de l'autre. Une plaque présente un alésage en son centre tandis que l'autre présente en son centre un taraudage. Une vis relie les deux plaques. De part et d'autre de la vis chaque plaque présente une rainure destinée à recevoir un fil. En position montée, les quatre rainures s'étendent parallèlement l'une à l'autre et une rainure d'une plaque est en vis-à-vis d'une rainure de l'autre plaque. Pour réaliser une liaison équipotentielle, les deux plaques sont tout d'abord suffisamment écartées l'une de l'autre. Un fil de chemin de câbles est alors disposé entre deux rainures en vis-à-vis tandis qu'une tresse métallique est disposée entre les deux autres rainures du dispositif. En venant serrer la vis centrale, on réalise d'un côté le pincement du fil du chemin de câbles et d'un autre côté le pincement de la tresse métallique. Un tel dispositif présente l'inconvénient de nécessiter un montage simultané sur le chemin de câbles et sur la tresse métallique, ce qui complique un peu le montage. En outre, ce dispositif ne permet pas d'obtenir un excellent niveau d'équipotentialité. Il est également connu dans le catalogue des produits commercialisés sous la marque Cablofil de disposer une plaque métallique qui vient en prise sur deux fils voisins, deux fils de chaîne ou deux fils de trame, et de venir monter sur cette plaque une borne, portant la référence "BLT" dans le catalogue Cablofil, qui est alors destinée à recevoir une tresse métallique. Ces dispositifs permettent d'obtenir un excellent niveau d'équipotentialité. Toutefois, ils prévoient un montage sur deux fils voisins. En outre, leur prix de revient est relativement élevé.

L'art antérieur est décrit dans les documents WO 2010/014951 A2, EP 2 184 808 A1 ou US 5,718,610.

La présente invention a alors pour but de fournir un dispositif de connexion électrique, adapté pour réaliser une liaison équipotentielle sur un chemin de câbles, qui soit d'un prix de revient peu élevé tout en assurant un très bon niveau d'équipotentialité. Ce dispositif sera de préférence facile à mettre en œuvre.

À cet effet, la présente invention propose un ensemble selon la revendication 1.

Selon la présente invention, pour chaque logement le corps présente une base de laquelle s'étendent deux branches, le fond du logement étant situé contre la base et le logement s'étendant entre les deux branches, et chaque branche présente une face intérieure en vis-à-vis de l'autre branche, les deux faces intérieures étant taraudées de manière à pouvoir recevoir entre elles la vis de serrage correspondante.

De cette manière, on peut réaliser un dispositif simple avec deux logements munis chacun de moyens de serrage. On peut ainsi réaliser un serrage individuel des éléments devant être mis au même potentiel. De la sorte, un bon niveau d'équipotentialité peut être obtenu. En outre, cette forme de réalisation avec des moyens de serrage distincts pour chacun des éléments devant être mis au même potentiel permet de faciliter la mise en oeuvre d'un tel dispositif de connexion.

Pour obtenir un dispositif compact et également ergonomique, il est proposé que les logements soient disposés côte à côte de telle sorte que les branches des divers logements s'étendent parallèlement l'une par rapport à l'autre et soient alignées. De la sorte, les deux vis de serrage sont l'une à côté de l'autre et elles peuvent toutes deux être vissées sans avoir à changer l'orientation du tournevis -ou similaire- utilisé.

Si la vis de serrage pour chaque logement est une vis sans tête avec fente, la vis en position serrée peut être entièrement introduite dans le logement. En position montée, la vis de serrage ne fait alors pas saillie hors du corps du dispositif notamment lorsque la longueur de chaque vis est au plus égale à la longueur du taraudage correspondant réalisé entre deux branches d'un logement.

Une forme de réalisation prévoit que les branches s'étendent toutes d'une même face de la base, que la face de la base opposée à la face portant les branches présente une surface plane dans laquelle est réalisée un taraudage, et qu'une vis à tête est associée audit taraudage. Indépendamment de l'invention, cette forme de réalisation du dispositif de connexion est avantageuse car elle permet d'avoir un dispositif de connexion qui est aussi bien adapté à des chemins de câbles en fils qu'à des chemins de câbles en tôle. En effet, lorsque le dispositif est utilisé avec un chemin de câbles en fils, on utilise alors les deux logements et les vis de serrage correspondantes tandis qu'avec un chemin de câbles en tôle, on n'utilise qu'un seul logement et la vis de serrage correspondante mais on utilise la vis à tête et le taraudage correspondant pour réaliser une fixation sur le chemin de câbles en tôle. La vis à tête utilisée ici peut être de nombreux types. Il s'agit de préférence d'une vis ne présentant pas de tête fraisée mais dont la tête présente une surface plate d'appui du côté de la tige filetée.

Pour favoriser un bon contact électrique au fond des logements destinés à recevoir un fil, ce fond est avantageusement rainuré ou bien encore moleté.

Un dispositif de connexion d'un ensemble selon l'invention tel que décrit ci-dessus peut être réalisé par exemple par usinage dans un alliage à base d'aluminium, éventuellement à partir d'une barre profilée, ou bien encore par moulage dans un alliage à base de zinc, tel par exemple du zamak (une opération d'usinage -taraudage- étant alors aussi éventuellement prévue).

Des détails et avantages de la présente invention ressortiront mieux de la description qui suit, faite en référence aux dessins schématiques annexés sur lesquels :
La figure 1 montre en perspective un ensemble selon l'invention dont le dispositif est dans sa position montée sur un chemin de câbles en fils,
La figure 2 est une vue en perspective selon un autre angle de l'ensemble montré sur la figure 1 ,
La figure 3 est une vue en coupe à échelle agrandie selon la ligne de coupe III-III de la figure 1,
La figure 4 est une vue en perspective éclatée du dispositif de connexion montré sur les figures 1 à 3,
La figure 5 est une vue correspondant à la figure 1 pour une variante de réalisation d'un dispositif de connexion de l'ensemble selon la présente invention, et
La figure 6 montre, indépendamment de la présente invention, le dispositif de connexion de la figure 5 monté sur un tronçon de chemin de câbles en tôle.

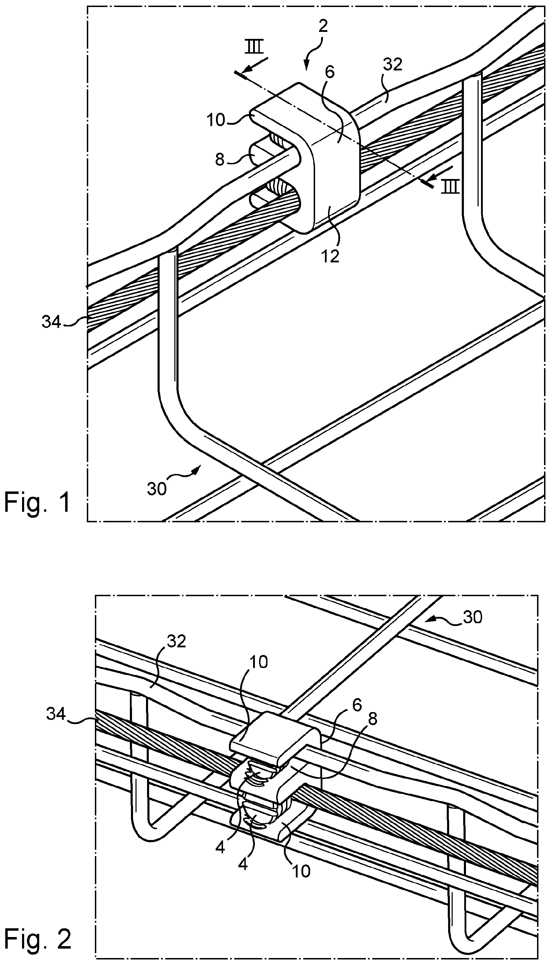

Un dispositif de connexion d'un ensemble selon la présente invention, tel que représenté par exemple sur les figures 1 à 4, comporte un corps 2 et deux vis 4. Dans les formes de réalisations préférées représentées sur les dessins ci-joint, on remarque que le corps 2 comporte une base 6 de laquelle s'étendent trois branches, une branche centrale 8 et deux branches latérales 10. Le corps 2 présente ainsi une forme profilée dont la section transversale rappelle un W.

Le corps 2 est réalisé dans un matériau conducteur de l'électricité. Il s'agit par exemple d'un corps métallique. À titre d'exemple non limitatif, le corps 2 peut être réalisé dans un alliage à base d'aluminium ou de zinc. Dans ce dernier cas, il peut par exemple s'agir d'un corps en zamak. Un corps 2 tel que représenté sur les dessins peut être obtenu par usinage d'un tronçon de profilé ou d'une pièce moulée.

La base 6 présente un fond 12 sensiblement plat. Il porte les branches latérales 10 et la branche centrale 8 qui s'étendent perpendiculairement au fond 12. Les branches latérales 10 et la branche centrale 8 forment des parois sensiblement planes. Chaque branche latérale 10 présente une face externe 14 et une face interne 16. Chaque face interne 16 se trouve en vis-à-vis de la branche centrale 8. Les faces externes 14 sont des faces opposées aux faces internes 16, Elles sont raccordées par exemple par un arrondi au fond 12. Les branches latérales 10 présentent également un bord libre 18 et des bords latéraux 20.

La branche centrale 8 présente elle aussi, comme les branches latérales 10, une forme générale parallélépipédique. Elle s'étend parallèlement aux branches latérales 10 et se trouve entre celles-ci. Elle présente deux grandes faces 22, chacune de ces grandes faces 22 étant en vis-à-vis d'une face interne 16 d'une branche latérale 10. Elle présente en outre un bord libre 24, qui, de même que les bords libres 18 des branches latérales 10, est opposé au fond 12. Enfin, la branche centrale 8 présente également deux bords latéraux 26.

Le corps 2 présente ainsi à chaque fois entre une branche latérale 10 et la branche centrale 8 un espace ouvert sur trois cotés Cet espace peut être défini comme une fente séparant à chaque fois une branche latérale 10 de la branche centrale 8. Cet espace est également appelé par la suite logement car il est destiné à recevoir d'une part un fil de tronçon de chemin de câbles en fils ou bien un fil métallique et d'autre part une vis 4.

Pour recevoir une vis 4, un taraudage est réalisé parallèlement aux branches latérales 10 et à la branche centrale 8, et donc perpendiculairement à la base 6. On retrouve ainsi deux taraudages réalisés à chaque fois sur une face interne 16 d'une branche latérale 10 et sur une grande face 22 de la branche centrale 8. On remarque que le filet de ce taraudage est incomplet. En effet, l'espace entre chaque branche latérale 10 et la branche centrale 8 étant un espace ouvert, le taraudage correspondant est à chaque fois interrompu au niveau des faces ouvertes de cet espace. Chaque taraudage ainsi réalisé est adapté aux vis 4. Dans la forme de réalisation choisie ici, afin de limiter l'encombrement, les vis 4 sont des vis sans tête, par exemple avec une fente. On pourrait bien entendu choisir ici tout autre type de vis, avec ou sans tête, fendue ou non, avec éventuellement un six pans creux, ou une forme hexagonale, etc.. L'essentiel ici est que le pas de vis des vis 4 corresponde aux filets des taraudages réalisés dans les branches latérales 10 et la branche centrale 8.

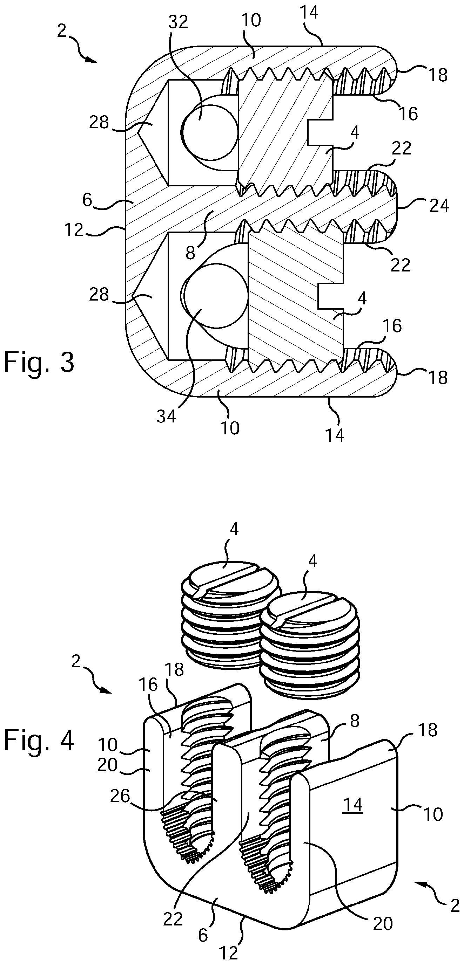

Pour des raisons techniques, comme on peut le voir sur la figure 3, un trou 28 est réalisé dans la base 6. Ce trou est, comme le sait l'homme du métier, nécessaire pour réaliser les taraudages décrits précédemment.

Sans tenir compte du trou 28, le logement réalisé entre une branche latérale 10 et la branche centrale 8 présenterait la forme d'une cuvette dont le rayon de courbure est adapté pour recevoir soit un fil d'un tronçon de chemin de câbles en fils, soit une tresse métallique. Comme illustré sur la figure 4, le fond du logement en forme de cuvette est un fond rainuré afin de favoriser un bon contact électrique entre ledit fond, et donc le corps 2, et le fil qu'il est destiné à recevoir.

Les figures 1 et 2 illustrent un dispositif de connexion tel que décrit ci-dessus en position montée sur un tronçon de chemin de câbles en fils 30. Un exemple de montage est donné ci-après.

Le dispositif de connexion décrit ci-dessus est par exemple livré avec les vis 4 prémontées dans leur taraudage respectif. Un opérateur peut alors à l'aide d'un tournevis retirer une première vis, libérant ainsi l'accès au fond d'un premier logement du dispositif de connexion. Un fil de chaîne 32 (le fil de rive sur les figures 1 et 2 mais il pourrait bien entendu s'agir d'un autre fil de chaîne) est alors introduit dans le logement ainsi ouvert et est coulissé vers le fond en forme de cuvette. La vis 4 peut alors être à nouveau introduite et vissée dans son logement de manière à venir presser le fil de chaîne 32 contre le fond en forme de cuvette du logement correspondant. Le dispositif de connexion est alors fermement fixé sur le tronçon de chemin de câbles en fils 30. On peut alors retirer la seconde vis 4 du dispositif de connexion libérant ainsi l'accès au second logement du dispositif de connexion. Ce second logement peut alors accueillir une tresse métallique 34. Celle-ci est également poussée au fond du logement qui présente lui aussi une forme de cuvette. La seconde vis 4 vient à nouveau en prise avec son taraudage et elle est serrée de manière à venir presser la tresse métallique 34 contre le fond en forme de cuvette du second logement.

Bien entendu, comme l'homme du métier le remarquera tout de suite, l'ordre des opérations peut être changé. On peut bien entendu monter tout d'abord la tresse métallique avant de monter le dispositif sur le tronçon de chemin de câbles en fils. Il est également possible par exemple de prévoir de livrer le dispositif avec d'un côté le corps 2 et d'un autre côté les vis 4 non prémontées. Toute variante de montage peut ici être envisagée.

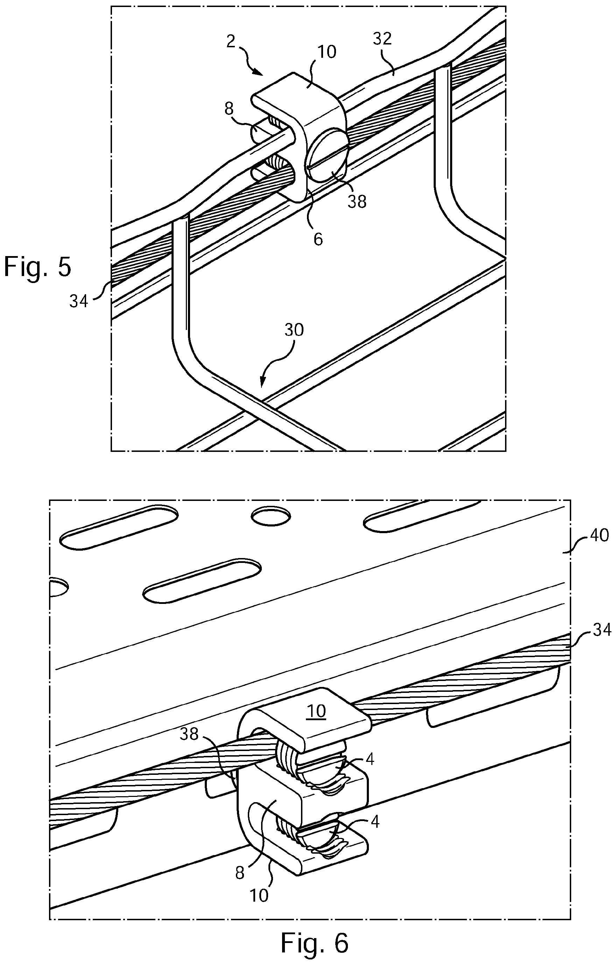

Les figures 5 et 6 illustrent une variante de réalisation du dispositif de connexion montré sur les figures 1 à 4. Cette variante de réalisation reprend les caractéristiques de la forme de réalisation représentée les figures 1 à 4 mais permet en outre, indépendamment de la présente invention, d'utiliser un tel dispositif de connexion avec un chemin de câbles en tôle.

Le dispositif de connexion montré sur les figures 5 et 6 reprenant les mêmes caractéristiques que celui des figures 1 à 4, la description ci-après reprend pour cette variante de réalisation également les mêmes références pour désigner des éléments similaires.

Comme il ressort directement des figures 5 et 6 jointes, le dispositif de connexion représenté ici comporte en plus un trou taraudé et une vis à tête 38.

Le trou taraudé est réalisé dans la base 6. Il s'agit d'un trou taraudé borgne qui s'étend éventuellement jusque dans la branche centrale 8. Ce trou taraudé débouche dans le fond 12. Il est réalisé ici selon une direction perpendiculaire à ce fond 12 et s'étend donc parallèlement aux deux autres taraudages. La vis à tête 38 est une vis du type de celle couramment utilisée par l'homme du métier pour réaliser une fixation sur un tronçon de chemin de câbles en tôle 40. Un tel chemin de câbles présente de manière tout à fait classique des trous, le plus souvent des trous allongés. Ces trous sont utilisés comme lumière permettant de voir notamment les câbles à l'intérieur du chemin de câbles mais sont également utilisés pour la fixation d'accessoires sur le chemin de câbles. Ainsi, il est connu d'utiliser des vis dont la tige filetée présente un diamètre inférieur à la largeur des trous allongés réalisés dans le tronçon de chemin de câbles en tôle 40 et présentant une tête d'un diamètre supérieur à la largeur des trous allongés de ce même tronçon de chemin de câbles en tôle 40. Comme illustré sur la figure 6, le dispositif de connexion est alors fixé sur le tronçon de chemin de câbles en tôle 40.

Dans le cas de l'utilisation d'un dispositif de connexion tel que décrit ci-dessus sur un tronçon de chemin de câbles en tôle 40, seul l'un des deux logements du dispositif de connexion est alors utilisé pour recevoir une tresse métallique 34. On peut Ici imaginer aussi que le second logement est utilisé pour recevoir une autre tresse métallique, réalisant ainsi le raccordement de deux tresses métalliques.

Sur la figure 5, il est illustré comment ce dispositif de connexion peut être utilisé sur le tronçon de chemin de câbles en fils 30. Sur la figure 5, la vis à tête 38 est représentée. Il apparaîtra clairement à l'homme du métier que pour un tel montage cette vis est inutile,

Comme il ressort de la description qui précède, le dispositif de connexion de l'ensemble selon la présente invention est très simple dans sa forme qui est en outre de dimension réduite. De ce fait, le coût d'un tel dispositif de connexion est réduit, d'une part, car il met en œuvre une quantité de matière limitée et, d'autre part, car peu d'opérations d'usinage sont nécessaires pour le réaliser, Sur ce dernier point, il suffit de réaliser une pièce moulée ou bien de tronçonner un profilé puis de réaliser deux taraudages (trois pour les formes de réalisation des figures 5 à 6). De plus, en fonction des matériaux utilisés, il n'est pas nécessaire de prévoir de traitement anti-oxydation, ce qui permet de maintenir un coût de production peu élevé.

Le dispositif de connexion présenté est également facile à mettre en œuvre. Il est en effet possible de mettre en place un premier élément, tresse ou fil, de le serrer à l'aide d'une vis et ensuite de mettre l'autre élément en place avant de le serrer. La forme du logement, en forme de fente, facilite également l'introduction du fil du tronçon de chemin de câbles ou de la tresse métallique.

La pièce de connexion décrite ci-dessus permet également d'obtenir une liaison équipotentielle efficace. On vient en effet individuellement serrer chacun des deux éléments qui doivent être reliés électriquement. On peut donc assurer à chaque fois un bon serrage et un bon contact électrique.

La présente invention ne se limite pas aux formes de réalisation préférées décrites ci-dessus à titre d'exemples non-limitatifs. Elle concerne également toutes les variantes de réalisation à la portée de l'homme du métier, dans le cadre des revendications ci-après.

Ainsi, dans la description ci-dessus, on a deux logements taraudés disposés parallèlement l'un par rapport à l'autre. On ne sortirait pas du cadre de l'invention si les deux logements, au lieu d'être parallèles côte à côte étaient par exemple parallèles mais dos à dos. On pourrait également avoir deux logements disposés à 90° l'un de l'autre. L'originalité est d'avoir ici des logements en forme de fente qui sont fermés par une vis. La position relative des deux logements peut être adaptée. La forme de réalisation représentée a été choisie car elle permet, d'après les inventeurs, d'optimiser la compacité du dispositif tout en autorisant une mise en œuvre facile.

## Revendications

1. Ensemble formé par un tronçon de chemin de câbles en fils et un dispositif de connexion électrique dans lequel le dispositif de connexion électrique est un dispositif destiné à réaliser une liaison équipotentielle, comportant un corps (2) rigide conducteur de l'électricité présentant au moins deux logements avec chacun un fond destiné à recevoir un fil (32, 34) **caractérisé en ce que** les logements sont munis chacun d'une vis (4) de serrage d'un fil contre le fond du logement correspondant, **en ce que** pour chaque logement le corps (2) présente une base (6) de laquelle s'étendent deux branches (8, 10), le fond du logement étant situé contre la base (6) et le logement s'étendant entre les deux branches (8, 10), **en ce que** chaque branche (8, 10) présente une face intérieure (16, 22) en vis-à-vis de l'autre branche, les deux faces intérieures (16, 22) étant taraudées de manière à pouvoir recevoir entre elles la vis (4) de serrage correspondante, et **en ce qu'**une section d'un fil du tronçon de chemin de câbles en fils est disposée dans un logement entre un fond et une vis (4) de serrage.

2. Ensemble selon la revendication 1, **caractérisé en ce que** les logements sont disposés côte à côte de telle sorte que les branches (8, 10) des divers logements s'étendent parallèlement l'une par rapport à l'autre et sont alignées.

3. Ensemble selon l'une des revendications 1 ou 2, **caractérisé en ce que** la vis de serrage pour chaque logement est une vis (4) sans tête avec fente.

4. Ensemble selon la revendication 3, **caractérisé en ce que** la longueur de chaque vis (4) est au plus égale à la longueur du taraudage correspondant réalisé entre deux branches (8, 10) d'un logement.

5. Ensemble selon l'une des revendications 1 à 4, **caractérisé en ce que** les branches (8, 10) s'étendent toutes d'une même face de la base (6), **en ce que** la face (12) de la base (6) opposée à la face portant les branches (8, 10) présente une surface plane (12) dans laquelle est réalisée un taraudage, et **en ce qu'**une vis à tête (38) est associée audit taraudage.

6. Ensemble selon l'une des revendications 1 à 5, **caractérisé en ce que** le fond de chaque logement est rainuré.

7. Ensemble selon l'une des revendications 1 à 6, **caractérisé en ce que** le dispositif de connexion est réalisé par usinage dans un alliage à base d'aluminium.

8. Ensemble selon l'une des revendications 1 à 6, **caractérisé en ce que** le dispositif de connexion est réalisé par moulage dans un alliage à base de zinc, tel par exemple du zamak.

## Patentansprüche

1. Anordnung aus einem Gitterkanalstück und einer elektrischen Verbindungsvorrichtung, bei der die elektrische Verbindungsvorrichtung eine Vorrichtung zum Realisieren eines Potentialausgleichs ist, mit einem elektrisch leitfähigen starren Körper (2), der wenigstens zwei Aufnahmen mit jeweils einem Boden zur Aufnahme eines Drahtes (32, 34) aufweist,
**dadurch gekennzeichnet, dass** die Aufnahmen jeweils mit einer Schraube (4) zum Festklemmen eines Drahtes am Boden der jeweiligen Aufnahme versehen sind, dass der Körper (2) für jede Aufnahme eine Basis (6) aufweist, von der aus sich zwei Schenkel (8, 10) erstrecken, wobei der Boden der Aufnahme an der Basis (6) angeordnet ist und die Aufnahme sich zwischen den beiden Schenkeln (8, 10) erstreckt, dass jeder Schenkel (8, 10) eine Innenseite (16, 22) aufweist, die dem anderen Schenkel gegenüberliegt, wobei die beiden Innenseiten (16, 22) solchermaßen mit einem Gewinde versehen sind, dass zwischen ihnen die entsprechende Klemmschraube (4) aufgenommen werden kann, und dass ein Abschnitt eines Drahtes des Gitterkanalstücks in einer Aufnahme zwischen einem Boden und einer Klemmschraube (4) angeordnet ist.

2. Anordnung nach Anspruch 1,
**dadurch gekennzeichnet, dass** die Aufnahmen nebeneinanderliegend solchermaßen angeordnet sind, dass die Schenkel (8, 10) der einzelnen Aufnahmen parallel zueinander verlaufen und miteinander fluchten.

3. Anordnung nach einem der Ansprüche 1 oder 2,
**dadurch gekennzeichnet, dass** die Klemmschraube für jede Aufnahme ein Gewindestift (4) mit Schlitz ist.

4. Anordnung nach Anspruch 3,
**dadurch gekennzeichnet, dass** die Länge jeder Schraube (4) höchstens der Länge des jeweiligen zwischen den beiden Schenkeln (8, 10) einer Aufnahme ausgebildeten Gewindes entspricht.

5. Anordnung nach einem der Ansprüche 1 bis 4,
**dadurch gekennzeichnet, dass** die Schenkel (8, 10) sich alle von ein und derselben Seite der Basis (6) aus erstrecken, dass die Seite (12) der Basis (6), die der die Schenkel (8, 10) tragenden Seite abgewandt ist, eine ebene Fläche (12) aufweist, in der das Gewinde ausgebildet ist, und dass eine Kopfschraube (38) dem Gewinde zugeordnet ist.

6. Anordnung nach einem der Ansprüche 1 bis 5,
**dadurch gekennzeichnet, dass** der Boden jeder Aufnahme gerillt ist.

7. Anordnung nach einem der Ansprüche 1 bis 6,
**dadurch gekennzeichnet, dass** die Verbindungsvorrichtung durch spanende Formgebung mit einer Legierung auf Aluminiumbasis ausgeführt ist.

8. Anordnung nach einem der Ansprüche 1 bis 6,
**dadurch gekennzeichnet, dass** die Verbindungsvorrichtung durch Formguss mit einer Legierung auf Zinkbasis, zum Beispiel einer Zamak-Legierung, ausgeführt ist.

## Claims

1. An assembly formed by a length of cable tray of wire and a device for electrical connection in which the electrical connection device is a device for making an equipotential connection, comprising an electrically conducting rigid body (2) having at least two accommodations each with a bottom configured to receive a wire (32, 34) **characterized in that** the accommodations are each provided with a clamping screw (4) for clamping a wire against the bottom of the corresponding accommodation, and **in that** for each accommodation the body (2) has a base (6) from which extend two branches (8, 10), the bottom of the accommodation being located against the base (6) and the accommodation extending between the two branches (8, 10), **in that** each branch (8, 10) has an inside face (16, 22) facing opposite the other branch, the two inside faces (16, 22) being tapped so as to be able to receive between them the corresponding clamping screw (4), and **in that** a section of a wire of the length of cable tray of wire is disposed in an accommodation between a bottom and a clamping screw (4).

2. An assembly according to claim 1, **characterized in that** the accommodations are disposed side-by-side such that the branches (8, 10) of the various accommodations extend parallel to each other and are aligned.

3. An assembly according to one of claims 1 or 2, **characterized in that** the clamping screw for each accommodation is a headless screw (4) having a slot.

4. An assembly according to claim 3, **characterized in that** the length of each screw (4) is at most equal to the length of the corresponding tapping formed between two branches (8, 10) of an accommodation.

5. An assembly according to one of claims 1 to 4, **characterized in that** the branches (8, 10) all extend from the same face of the base (6), **in that** the opposite face (12) of the base (6) to the face bearing the branches (8, 10) has a planar surface (12) in which a tapping is formed, and **in that** a headed screw (38) is associated with said tapping.

6. An assembly according to one of claims 1 to 5, **characterized in that** the bottom of each accommodation is grooved.

7. An assembly according to one of claims 1 to 6, **characterized in that** the connection device is formed by machining from an aluminum-based alloy.

8. An assembly according to one of claims 1 to 6, **characterized in that** the connection device is formed by casting from a zinc-based alloy, for example such as zamak.
